# EUROPEAN PATENT APPLICATION

(11) **EP 0 785 460 A1**
(43) Date of publication of application: **23.07.1997**
(21) Application number: 96302543.2
(22) Date of filing: 11.04.1996
(51) Int. Cl.: G03B 17/53

(54) **Centralized remote supervision system for automatic photography booth**

(30) Priority: 18.01.1996 JP 6795/96
(71) Applicant: Konika Color Photo Equipments Co., Ltd., Tokyo (JP)
(72) Inventor: Hara, Haruo, c/o Konika Color Photo Equipm. Co Ltd, Tokyo (JP); Kawai, Takeshi, c/o Konika Color Photo Equipm. Co., Tokyo (JP); Komatsu, Nobuo, c/o Konika Color Photo Epuipm. Co., Tokyo (JP)
(74) Representative: Gordon, Michael Vincent

(57) **Abstract**

A centralized remote supervision system (1) for an automatic photography booth (2) performs centralized remote supervision by receiving in an information management centre (6) data transmitted from the automatic photography booth (2) and data transmitted from a communication device (30) of a customer (3); and centralized remote supervision data is transmitted from the information management centre (6) to the automatic photography booth (2) whereby quick apprehension of operational circumstances and of day by day sales are possible, and the speed and efficiency of maintenance and checking are enhanced.

## Description

### Background of the Invention

### (1) Field of the Invention

The present invention relates to a centralized remote supervision system for an automatic photography booth which automatically takes and develops photographs according to user operation.

### (2) Description of the Prior Art

This type of automatic photography booth may be set up in some space available in a public place such as, for example, the lobby of an office building or a train station, after having obtained the permission of an entity (herein termed the "customer") who is in charge of this space; and from time to time a maintenance man visits such an automatic photography booth in order to perform cash collection from the booth, maintenance and checking of the machinery thereof, and resupply of consumables such as chemicals for development and photographic paper.

Typically, the maintenance man is required to patrol at periodic intervals so as to perform cash collection from the automatic photography booth, maintenance and checking thereof, and resupply of consumables, but at particular seasons when there is a great demand for souvenir photographs such as the times of the year for graduation, school entry, return to school, and the like, and at high season times for foreign travel when the demand for passport photographs is heavy, the conditions of operation and the workload of the automatic photography booth are different from the usual ones, and it may happen that the booth becomes unusable due to running out of coins for change, or due to lack of consumable supplies.

Further, at any season, it may happen that the automatic photography booth becomes unusable due to something out of the ordinary taking place in its mechanism, or due to robbery or vandalism or the like.

When such an unusual event happens to the booth and operation thereof is interrupted, it is necessary for the maintenance man to execute corrective procedures on an emergency response basis, but nevertheless the situation is not satisfactory, since not only are total sales significantly reduced if the procedure for maintenance is delayed, but also trouble is caused for the customer who provides the space in which the booth is disposed, and the further problem arises of several complaints relating to the same interruption in service being repeatedly received by telephone from various users as well as from the customer.

### (3) Summary of the Invention

The objective of the present invention is, in consideration of the above described points, to propose a centralized remote supervision system for an
automatic photography booth, according to the operation of which quick understanding of current operational circumstances and quick understanding of day by day sales are possible, and moreover quick and efficient maintenance and checking are possible.

In order to attain such an objective, and in order to resolve the above described problems, the centralized remote supervision system for an automatic photography booth of the present invention is characterized in that centralized remote supervision is performed by receiving in an information management center data transmitted from the automatic photography booth and data transmitted from a communication device of a customer; and centralized remote supervision data is transmitted from the information management center to the automatic photography booth. By performing centralized remote supervision by receiving in the information management center the data transmitted from the automatic photography booth and the data transmitted from the communication device of the customer, it becomes possible quickly to apprehend the operational circumstances of the automatic photography booth, and to know the day by day sales; and, moreover, by transmitting the centralized remote supervision data from the information management center to the automatic photography booth, a maintenance man can know the operational circumstances from the centralized remote supervision data which has been transmitted to the automatic photography booth, so that quick and efficient maintenance and servicing are possible.

Further, the centralized remote supervision system for an automatic photography booth of the present invention may be further characterized in that the data which is received in the information management center is photographic processing information, breakdown information, monetary information, crime prevention information, and maintenance information. In the information management center, the photographic processing information, the breakdown information, the monetary information, the crime prevention information, and the maintenance information are received, so that it is possible quickly to apprehend the operational circumstances of the automatic photography booth, and to know the day by day sales; and, for example, it is possible to arrange the automatic photography booths so as to concentrate them in highly frequented places.

Yet further, the centralized remote supervision system for an automatic photography booth of the present invention may be further characterized in that, along with the centralized remote supervision data from the information management center being transmitted to the automatic photography booth, it is also transmitted to a maintenance communication device in order to service and check the automatic photography booth. Since also the centralized remote supervision data from the information management center is transmitted to a maintenance communication device in order to service and check the automatic photography booth, for example a maintenance man who is carrying the maintenance communication device is able to know the current operational circumstances of the automatic photography booth from the centralized remote supervision data which have been transmitted, so that quick and efficient maintenance and servicing are possible.

Even further, the centralized remote supervision system for an automatic photography booth of the present invention may be further characterized in that the centralized remote supervision data from the information management center transmitted to the automatic photography booth is capable of stopping the operation of the automatic photography booth. Since the operation of the automatic photography booth can be stopped by the transmission of the centralized remote supervision data from the information management center, for example it is possible to prevent the sale of poor quality photographs by the automatic photography booth until the process of maintenance and testing has been completed, and thus it is possible to reduce or prevent the repeated receipt of multiple complaint telephone calls from users or from the customer relating to the same problem.

Even yet further, the centralized remote supervision system for an automatic photography booth of the present invention may be further characterized in that the automatic photography booth is capable of transmitting a completion signal in the centralized remote supervision data after maintenance and checking to the information management center. By sending a completion signal in the centralized remote supervision data to the information management center from the automatic photography booth when the maintenance and testing of the automatic photography booth have been completed, thereby it is possible for the information management center quickly and accurately to be informed of the completion of maintenance and checking.

### (4) Brief Description of the Drawings

Fig. 1 is a schematic structural diagram of a centralized remote supervision system for an automatic photography booth.

Fig. 2 is a figure showing a process for dealing with sales management data.

Fig. 3 is a figure showing a process for dealing with out of the ordinary or emergency data.

Fig. 4 is a figure showing a process for dealing with maintenance management data.

Fig. 5 is a figure showing a process for dealing with complaint processing.

### (5) Detailed Description of the Preferred Embodiment

In the following, the preferred embodiment of the centralized remote supervision system for an automatic photography booth of the present invention will be described with reference to the figures.

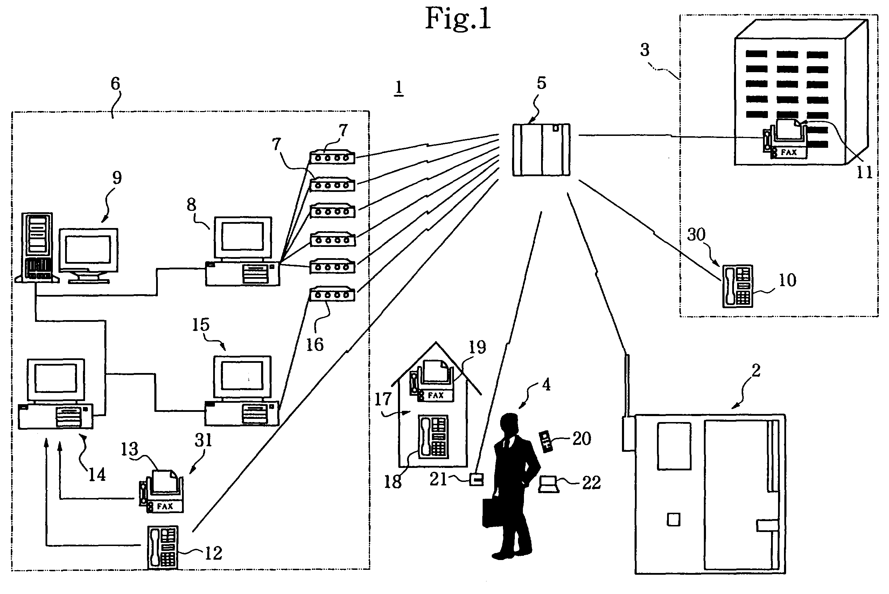

This centralized remote supervision system for an automatic photography booth has an overall construction as shown in Fig. 1, and a automatic photography booth 2 thereof is a device which upon insertion of money automatically produces one or a set of photographs (such as portrait photographs) of a user. This automatic photography booth 2 may have been set up in some space available in a public place such as, for example, the lobby of an office building or a train station, after having obtained the permission of an entity, hereinafter termed the " customer" and denoted in the figure by the reference numeral 3, who is in charge of this space; and from time to time a maintenance man, denoted as 4, visits such an automatic photography booth 2 in order to perform cash collection from the booth 2, maintenance and checking of the machinery thereof, and resupply of consumables such as chemicals for development and photographic paper.

In practice, of course, a plurality of such automatic photography booths 2 will be supervised by a single centralized remote supervision system for an automatic photography booth of the present invention, although only one such booth 2 is shown in the figures.

Data from the automatic photography booth 2 is transmitted in signal form via a telephone line 5, and in an information management center 6 this data signal is received in a signal reception client computer 8 via a modem 7, and this data is stored upon an information server computer 9.

Further, a signal representing data from the customer 3 is transmitted by a signal transmission device 30 like a telephone 10 or a facsimile 11 etc. via a telephone line 5, and this data signal is received by a signal reception device 31 like a telephone 12 or a facsimile 13 etc. in the information management center 6. This data, the signal of which has been received by the telephone 12 or the facsimile 13 etc., is input into a complaint office client computer 14 by an operator, and this information is stored in the information server computer 9.

The centralized remote supervision system 1 performs centralized remote supervision by receiving the data signal which is transmitted from the automatic photography booth 2 and the data signal which is transmitted from the signal transmission device 30 of the customer 3 in the information management center 6, storing such data in the information server computer 9, and displaying this stored information, when required, via a data processing client computer 15.

The data signal which is received by the information management center 6 may be photographic processing information, breakdown information, monetary information, crime prevention information, maintenance information, or the like. The photographic processing information may include number of film frames remaining, amount of supplementary processing fluid remaining, amount of printing paper remaining, and the like. The breakdown information may include signals representing faults such as flash failure to emit light when performing photography, printing paper running out, illumination unsatisfactory, processing fluid temperature abnormal, error during operation, and the like. The monetary information may include the number of times payment has been received. The crime prevention information may include crime prevention notification information such as the output of a sensor which detects door opening and closing. And the maintenance information may include maintenance items related to exposure amount adjustment and the like.

In the information management center 6, centralized remote supervision data is transmitted as a signal from the data processing client computer 15 to the automatic photography booth 2 by a modem 16 via the telephone line 5, and further is transmitted as a signal to the facsimile 11 of the customer 3 who manages the automatic photography booth 2. And the centralized remote supervision data from the data processing client computer 15 is transmitted as a signal to a maintenance man signal receiver 17 which alerts the maintenance man 4 for maintenance of the automatic photography booth 2. This maintenance signal receiver 17 there may consist of a telephone 18 or a facsimile 19 installed in the home of the maintenance man 4, a portable telephone 20 which the maintenanceman 4 carries with him, or a pager 21 or the like.

In this manner, since the centralized remote supervision data from the information management center 6 is also transmitted as a signal to the maintenance man signal receiver 17 in order to instigate maintenance of the automatic photography booth 2, for example the maintenance man 4 can be apprised of the current operational circumstances of the automatic photography booth from the centralized remote supervision data which is transmitted, and quick and efficient maintenance and checking become possible.

Further, the maintenance man 4 may carry a so called handy terminal 22 which includes a display, and periodic maintenance is started by connecting this handy terminal 22 to the automatic photography booth 2. It is so arranged that the automatic photography booth 2 is in the locked state if the handy terminal 22 is not connected thereto, so that robbery or vandalism or the like thereof are impeded. When the handy terminal 22 is connected to the automatic photography booth 2, the maintenance man 4 can be apprised of the current working circumstances thereof from the centralized remote supervision data which are transmitted to the automatic photography booth 2, so that quick and moreover efficient maintenance and checking are possible.

Furthermore, since the centralized remote supervision data are transmitted to the automatic photography booth 2 from the information management center 6, therefore in the case of necessity the operation of the automatic photography booth 2 can be stopped. By stopping the operation of the automatic photography booth 2 in this manner by transmission of a stop signal in the centralized remote supervision data from the information management center 6, for example the sale of poor quality photographs may be prevented until maintenance has be encompleted, and this functions to reduce the possibility of repeated telephone calls from the customer relating to the same complaint.

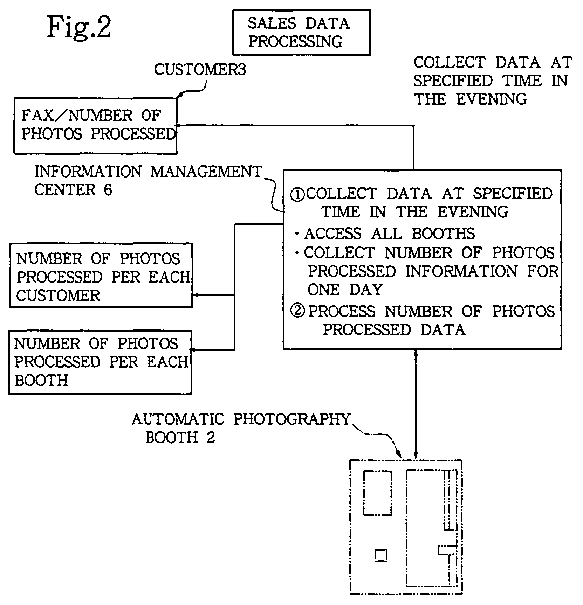

Next, the data processing executed by this centralized remote supervision system for an automatic photography booth will be further explained in concrete terms, based upon Figs. 2 through 5. Sales management data processing, out of the ordinary or emergency data processing, maintenance management data processing, and complaint processing are performed in the information management center 6, based upon the data which is transmitted as signals from the automatic photography booth 2, and/or the customer 3, and/or the maintenance man 4.

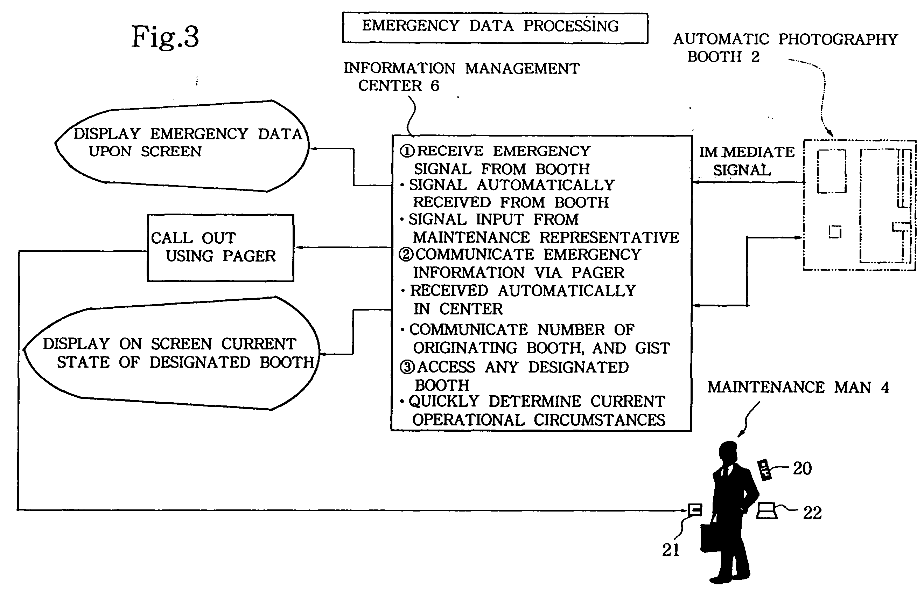

First, the concrete processing of the sales management data will be explained in detail, based upon Fig. 2 which is a figure showing a process for dealing with such sales management data. The data from the automatic photography booth 2 (actually, for all the booths 2 in the system) is collected at a specified time, typically late in the evening, by the information management center 6, and data processing is performed for the number of sheets of photographic paper which have been processed. This data collection at a specified time in the evening consists of accessing all of the automatic photography booths 2 in order to collect the information for the number of sheets of photographic paper which have been processed in the preceding day. This information representing the number of sheets of photographic paper processed is retransmitted as a signal from the information management center 6 to the customer 3 via his facsimile 11, and thereby information service is provided to the customer 3. Further, in the information management center 6, output is performed of sales data such as the number of sheets of photographic paper processed for each customer, the number of sheets of photographic paper processed for each booth 2, etc.. Next, the concrete processing of out of the ordinary or emergency data will be explained in detail, based upon Fig. 3 which is a figure showing a process fordealing with such out of the ordinary emergency data. Initially, an emergency information signal is received in the information management center 6 from the automatic photography booth 2. The receipt of this emergency information signal is performed promptly when it is transmitted by that one of the automatic photography booths 2 which automatically emits it, or when an input signal containing emergency information from a representative of the customer 3 is received, and this emergency data is displayed upon a screen in the information management center 6.

The information management center 6 executes the appropriate procedure for calling out the maintenance man 4 upon his pager 21, and emergency information is then communicated to the maintenance man 4 via the pager 21. Alternatively, the emergency information may be communicated to the maintenance man 4 via his portable telephone 20. The transmission of this emergency information signal is automatically received by the information management center 6, and this signal includes the machine number of the automatic photography booth 2 which has generated it, as well as various data representing the contents of the emergency information. The maintenance man 4 may commence maintenance and checking by connecting his handy terminal 22 to the automatic photography booth 2.

Further, in the information management center 6, it is possible immediately to be apprised of the current operational circumstances of any specified one of the automatic photography booths 2, by accessing that automatic photography booth 2, and by displaying upon screen the current state thereof.

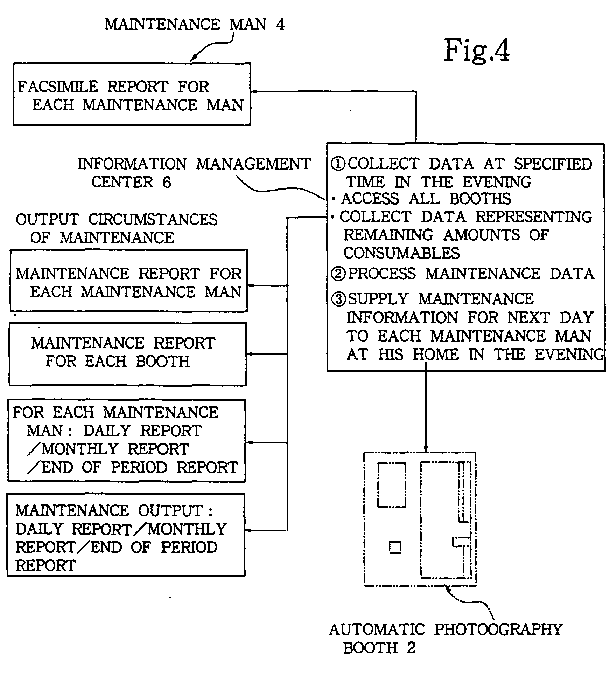

Next, the concrete processing of maintenance management data will be explained in detail, based upon Fig. 4 which is a figure showing a process for dealing with such maintenance management data. Data is collected in the information management center 6 from the automatic photography booths 2 at a specified time, typically late in the evening.

This data collection process consists of accessing all of the automatic photography booths 2 in order to collect the data representing the remaining amounts of consumables such as change, photographic paper, chemicals for development, and the like. Data processing relating to the items for maintenance is performed using the data which has been collected in the information management center 6, and later in the evening the maintenance information for the next day is despatched to the home of each maintenance man 4 separately as a day report for that maintenance man 4. These day reports are typically transmitted as signals via the facsimiles 19 in the homes of the maintenance men 4.

Further, in the information management center 6, output of the circumstances of maintenance is performed. This output of the circumstances of maintenance may consist, for each maintenance man 4 and for each booth 2, of a daily maintenance report, a monthly maintenance report, a term end maintenance report, and the like.

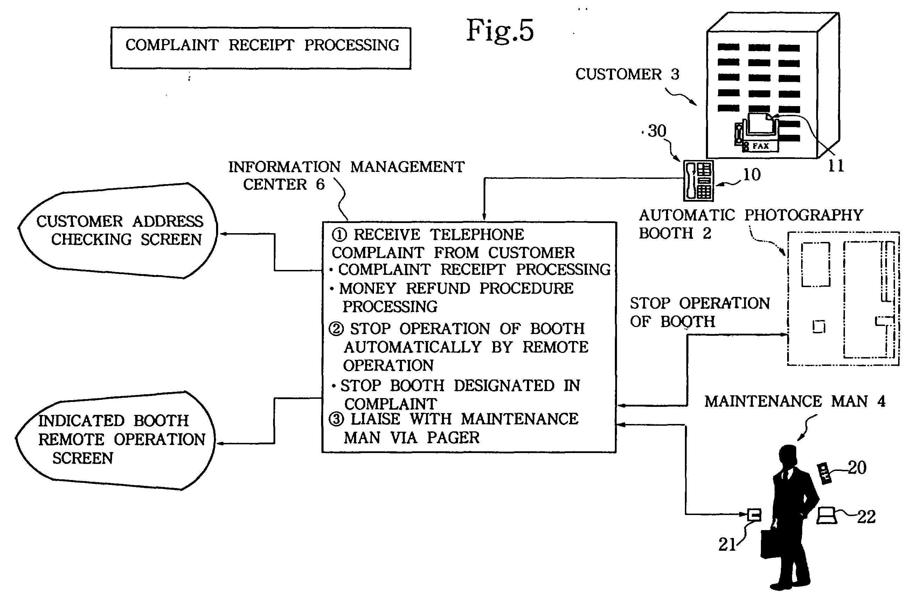

Next, the concrete processing for complaint processing will be explained in detail, based upon Fig. 5 which is a figure showing a process for dealing with such complaint processing. Initially, in the information management center 6, a complaint is received from the customer 3 via the telephone 10 or via the facsimile 11. If for example it is arranged to receive such complaints from the customer 3 via a telephone number which is free of charge, this service can be provided without cost to the calling party. In the information management center 6, this complaint information is displayed upon screen in order to check the address of the customer 3 and so on, and complaint processing and money repayment processing are performed.

Upon receipt of this complaint in the information management center 6, the operation of the automatic photography booth 2 is stopped by remote control.

That is to say, a remote operation screen for the automatic photography booth 2 which is designated by the complaint message is displayed, and a stop order is output so that the automatic photography booth 2 stops operation automatically Further, an emergency message is sent from the information management center 6 to the maintenance man 4 via his portable telephone 20 or his pager 21. The maintenance man 4 then travels to the automatic photography booth 2 as quickly as possible, connects his handy terminal 22 to the booth 2, and performs maintenance and checking in order to remedy the fault that caused the complaint. The following benefits are obtained by the operation of the present invention as described above.

Since according to the present invention centralized remote supervision is performed by receiving in the information management center signals representing data transmitted from the automatic photography booths and also data signals sent from signal transmitting devices belonging to the customer, thereby it is possible quickly to apprehend the current operational circumstances of each automatic photography booth, as well as to apprehend daily sales figures; and , further, by sending signals representing centralized remote supervision data from the information management center to the automatic photography booths, the maintenance man can be informed of the current operational circumstances of a booth from the centralized remote supervision data which has thus been transmitted to that booth, and thereby can quickly and efficiently perform maintenance and checking.

Further, since according to the present invention photographic processing information, breakdown information, monetary information, crime prevention information, and maintenance information are received by the information management center, quick apprehension of the current operational circumstances , as well as quick grasp of day by day sales figures, is possible; and for example the automatic photography booths can be arranged and concentrated in highly frequented places, which is effective from the point of view of business strategy.

Yet further, since according to the present invention the centralized remote supervision data are also transmitted from the information management center ta maintenance signal receiving device in order to perform maintenance and checking of the automatic photography booth, for example a maintenance man who is carrying the maintenance signal receiving device can quickly and easily apprehend the current operational circumstances of the automatic photography booth from the centralized remote supervision data which is transmitted, where by he can quickly and efficiently perform maintenance and checking.

Still further, since according to the present invention the operation of the automatic photography booth can be stopped by the transmission from the information management center of appropriate centralized remote supervision data, for example the sales of poor quality photographs can be stopped until the maintenance and checking procedure has been completed, and it is possible to reduce or prevent the repeated receipt of multiple complaint telephone calls from users or from the customer relating to the same problem.

Even further, since according to the present invention a completion signal is transmitted from the automatic photography booth to the information management center in the centralized remote supervision data signal when the maintenance and checking of the automatic photography booth has been completed, thereby the information management center can quickly and accurately be informed of the completion of maintenance and checking.

Although the present invention has been shown and described in terms of the preferred embodiment thereof, it is not to be considered as limited by any of the perhaps quite fortuitous details of this preferred embodiment or of the drawings, but only by the terms of the appended claims, which follow.

## Claims

1. A centralized remote supervision system for an automatic photography booth, characterized in that centralized remote supervision is performed by receiving in an information management centre (6) data transmitted from the automatic photography booth (2) and data transmitted from a communication device (30) of a customer (3); and centralized remote supervision data is transmitted from said information management centre (6) to said automatic photography booth (2).

2. A centralized remote supervision system for an automatic photography booth according to claim 1, further characterized in that the data which is received in said information management centre is one or more of photographic processing information, breakdown information, monetary information, crime prevention information, and maintenance information.

3. A centralized remote supervision system for an automatic photography booth according to either preceding claim, further characterized in that, along with the centralized remote supervision data from said information management centre being transmitted to said automatic photography booth, it is also transmitted to a maintenance communication device (17) in order to service and check said automatic photography booth.

4. A centralized remote supervision system for an automatic photography booth according to any preceding claim, further characterized in that the centralized remote supervision data from said information management centre transmitted to said automatic photography booth is capable of stopping the operation of said automatic photography booth.

5. A centralized remote supervision system for an automatic photography booth according to any preceding claim, further characterized in that said automatic photography booth is capable of transmitting a completion signal after maintenance and checking in the centralized remote supervision data to said information management centre.
